# EUROPEAN PATENT APPLICATION

(11) **EP 2 784 548 A2**
(43) Date of publication of application: **01.10.2014**
(21) Application number: 13173740.5
(22) Date of filing: 26.06.2013
(51) Int. Cl.: G01V 1/00, G01V 1/18

(54) **Earthquake monitoring sensor and earthquake monitoring system including the same**

(30) Priority: 29.03.2013 KR 20130034377
(71) Applicant: Korea Institute of Geoscience & Mineral Resources, Daejeon 305-350 (KR)
(72) Inventor: Sun, Chang-Guk, 305-308 DAEJEON (KR)
(74) Representative: Pontet Allano & Associes

(57) **Abstract**

An earthquake monitoring sensor based on an asymmetrical shape of facilities and an earthquake monitoring system including the same. The earthquake monitoring sensor is provided to facilities having an asymmetrical shape vulnerable to an earthquake and provides a rapid earthquake response with regard to an earthquake-vulnerable direction of the facilities, thereby enabling establishment of effective countermeasures to the earthquake. The earthquake monitoring sensor for facilities includes a north-to-south component vibration measuring device sensing a north-to-south direction vibration signal; and an east-to-west component vibration measuring device sensing an east-to-west direction vibration signal, wherein a vibration signal sensing direction of one of the north-to-south component vibration measuring device and the east-to-west component vibration measuring device is set to match a vulnerable direction of corresponding facilities, and monitoring data output from the vibration measuring device set to match the vulnerable direction is provided as vulnerable direction data of the corresponding facilities.

## Description

### BACKGROUND

### 1. Technical Field

The present invention relates to an earthquake monitoring sensor based on an asymmetrical shape of facilities and an earthquake monitoring system including the same, and more particularly, to an earthquake monitoring sensor based on an asymmetrical shape of facilities, which is provided to facilities having an asymmetrical shape vulnerable to an earthquake and provides a rapid earthquake response with regard to an earthquake-vulnerable direction of the facilities, thereby enabling establishment of effective countermeasures to the earthquake, and an earthquake monitoring system including the same.

### 2. Description of the Related Art

Earthquakes occasionally cause huge loss of life and property damage. A degree of earthquake-induced hazard depends on many complex factors, such as earthquake magnitude, focal depth, earthquake-resistance strategy, population in damaged districts, a concentrated degree of facilities, etc.

In particular, the degree of damage may largely differ even in adjacent places at the same distance from a hypocenter, that is, an underground place, or from an epicenter, that is, a ground surface upon which an earthquake is centered. Further, according to geotechnical conditions of each place, a relatively large ground motion can act on a site of a certain place, as compared with those of other sites. That is, ground motion of the certain site can be combined with geotechnical dynamic characteristics, and thus can be relatively amplified as compared with those of other sites. When facilities are present in a certain region under such similar conditions of the hypocentral or epicentral distance, damage concentration can be further significant due to a great variety of structural characteristics of the facilities.

Since structural characteristics of facilities depend on many various and complex factors, it is impossible to simply classify the structural characteristics into several indexes. However, a load component having a great effect on facilities is obvious. That is, in the case of an earthquake, which has a greater load component in a transverse (or horizontal) direction than a load component in a vertical direction near the ground surface, most facilities can be destroyed or damaged due to the load component applied in the transverse direction. For this reason, earthquake resistance in the transverse direction is more important in seismic design or seismic performance evaluation of facilities than earthquake resistance in the vertical direction. Further, an earthquake countermeasure or earthquake alert system for facilities based on actual earthquake monitoring data mainly employs transverse monitoring components as an index for decision-making.

The external scale of a facility capable of coping with a degree of earthquake damage can be simply determined based on the area and height of the facility or the corresponding floors thereof. If a simple scale obtained by multiplying the area by the height is taken into account, a variety of areas and heights can be provided under the same scale. In general three-dimensional outer shapes of facilities having the same scale, facilities having an approximate hemisphere or cube shape are more stable in a three-dimensional space than those having an asymmetrical geometric shape when external load by an earthquake or the like is applied thereto.

That is, facilities having a great height or an asymmetrical shape are more vulnerable to an earthquake, which has a dominant transverse shaking load, in a certain direction than in other directions. For example, a facility such as an apartment has a long rectangular shape and is thus more vulnerable to the transverse load in a direction parallel to a short side of the rectangular shape than the other directions in a three-dimensional space. In particular, many public or private facilities having asymmetrical shapes and elongated in one direction are vulnerable to an earthquake in a certain direction. A variety of facilities such as dams, breakwaters, bridges, railroad, pipelines, large-scale retaining walls, product production facilities, and the like are present, and most facilities generally have asymmetrical shapes in practice.

For systematic rapid earthquake response and synthetic establishment of earthquake strategy of facilities including asymmetrical facilities, earthquake alert systems capable of monitoring earthquake acceleration have been developed and established in recent years together with earthquake alert systems capable of monitoring earthquake velocity.

An earthquake monitoring instrument provided to such facilities is broadly divided into a sensor to sense vibration signals regarding an earthquake, and a recorder or digitizer for recording and storing this signal. An earthquake monitoring instrument recently developed in the art is provided with an additional device for transmitting data in connection with wired and wireless communication technologies, or is configured to realize a transmission function through the recorder. The sensor serves to sense an external vibration signal and is provided with a vibration measuring devices for three-components such as rectangular coordinate axes, which will be referred to as a longitudinal component, a transverse component and a vertical component, respectively. Generally, these components are respectively set to match with a north-to-south direction, an east-to-west direction and a vertical direction to gravity using a compass upon installation of the sensor.

As monitored by the sensor, which finishes setting-up of objective directions based on an absolute azimuth, earthquake acceleration data may be provided to main places such as public institutions. In this case, the directions of three components are divided into the north-to-south direction, the east-to-west direction and the vertical direction to be utilized by general users. However, such direction setup-based monitoring acceleration data has limited use as information for rapid and intuitive determination of the most vulnerable behavior of facilities upon an earthquake.

That is, to obtain acceleration data about the vulnerable direction of the facilities, a user must recalculate the monitoring data by taking into account an angle between the north-to-south (or east-to-west) direction and the vulnerable direction of the facilities based on two horizontal components (i.e., the longitudinal and traverse directions), as needed. Actually, in some earthquake alert systems, two horizontal components or a total of three components of the monitoring acceleration data are geometrically combined in operation software to provide ground-horizontal or three-dimensional peak ground acceleration (PGA). However, since PGA varies in direction over time, it is not regarded as directly useful data for the most vulnerable direction of the facilities under fixed conditions.

### BRIEF SUMMARY

The present invention has been conceived to solve such problems, and an aspect of the present invention is to provide an earthquake monitoring sensor based on an asymmetrical shape of facilities, which is provided to facilities having an asymmetrical shape vulnerable to an earthquake and provides a rapid earthquake response with regard to an earthquake-vulnerable direction of the facilities, thereby enabling establishment of effective countermeasures to the earthquake.

Another aspect of the present invention is to provide an earthquake monitoring system including the same.

According to one aspect of the present invention, an earthquake monitoring sensor for facilities includes a north-to-south component vibration measuring device sensing a north-to-south direction vibration signal; and an east-to-west component vibration measuring device sensing an east-to-west direction vibration signal, wherein a vibration signal sensing direction of one of the north-to-south component vibration measuring device and the east-to-west component vibration measuring device is set to match a vulnerable direction of corresponding facilities, and monitoring data output from the vibration measuring device set to match the vulnerable direction is provided as vulnerable direction data of the corresponding facilities.

An indicating direction of a vibration measuring device set up in a vulnerable direction on an outer surface of a cover of the earthquake monitoring sensor may be set to match the vulnerable direction of the corresponding facilities.

The vulnerable direction may be set to a minor axis direction of an equivalent ellipse, which has the same area as that of a top plane of the facilities and is determined by rotating the Cartesian coordinate system about a centroid corresponding to a center of the top plane of the facilities, when an intersection point between two axes respectively corresponding to a dominant direction of the facilities and a direction orthogonal thereto becomes the centroid.

The earthquake monitoring sensor may further include a vertical component vibration measuring device sensing a vertical direction vibration signal.

According to another aspect of the present invention, an earthquake monitoring sensor for facilities includes a north-to-south component vibration measuring device sensing a north-to-south direction vibration signal; an east-to-west component vibration measuring device sensing an east-to-west direction vibration signal; and a vulnerable component vibration measuring device sensing a vulnerable direction vibration signal, wherein monitoring data output from the vulnerable component vibration measuring device is provided as vulnerable direction data of corresponding facilities.

The vulnerable direction vibration measuring device may be secured by a screw after direction adjustment.

The vulnerable direction may be set to a minor axis direction of an equivalent ellipse, which has the same area as that of a top plane of the facilities and is determined by rotating the Cartesian coordinate system about a centroid corresponding to a center of the top plane of the facilities, when an intersection point between two axes respectively corresponding to a dominant direction of the facilities and a direction orthogonal thereto becomes the centroid.

The earthquake monitoring sensor may further include a stable component vibration measuring device sensing a stable direction vibration signal.

The vulnerable direction vibration measuring device may be secured by a screw after direction adjustment.

The stable direction may be set to a major axis direction of an equivalent ellipse, which has the same area as that of a top plane of the facilities and is determined by rotating the Cartesian coordinate system about a centroid corresponding to a center of the top plane of the facilities, when an intersection point between two axes respectively corresponding to a dominant direction of the facilities and a direction orthogonal thereto becomes the centroid.

The earthquake monitoring sensor may further include a vertical component vibration measuring device sensing a vertical direction vibration signal.

According to a further aspect of the present invention, an earthquake monitoring system includes an earthquake monitoring sensor which transmits vibration monitoring data including vulnerable direction vibration monitoring data of facilities; and a monitoring device which analyzes the vibration monitoring data from the earthquake monitoring sensor and monitors occurrence of an earthquake. Here, the monitoring device includes: a communication unit receiving the vibration monitoring data; an analysis unit analyzing the vibration monitoring data received from the communication unit; and a display unit displaying results analyzed by the analysis unit, wherein the display unit separately displays results obtained by analyzing a vulnerable direction.

The vulnerable direction vibration monitoring data may be generated from a vulnerable component vibration measuring device sensing a vulnerable direction vibration signal within the earthquake monitoring sensor.

The vibration monitoring data transmitted from the earthquake monitoring sensor may further include stable direction vibration monitoring data of the facilities.

The stable direction vibration monitoring data may be generated from a stable component vibration measuring device sensing a stable direction vibration signal within the earthquake monitoring sensor.

The display unit may further display an analysis result in a stable direction and a comparison result from between vulnerable and stable directions.

The vulnerable direction vibration monitoring data may be generated from a vibration measuring device set to match a vulnerable direction of the corresponding facilities between a north-to-south component vibration measuring device and an east-to-west component vibration measuring device.

The analysis unit may reprocess vulnerable direction vibration measuring data transmitted from the vibration measuring device set to match the vulnerable direction with original absolute azimuthal data.

### BRIEF DESCRIPTION OF THE DRAWINGS

The above and other aspects, features and advantages of the present invention will become apparent from the following description of embodiments provided in conjunction with the accompanying drawings, in which:
Fig. 1 is a view of an earthquake monitoring system according to one embodiment of the present invention;
Fig. 2 is a view explaining a shape of facilities, and corresponding vulnerable and stable directions according one embodiment of the present invention;
Fig. 3 is a view explaining a set-up principle for the vulnerable and stable directions of the facilities according to the embodiment of the present invention;
Fig. 4 is a view of an earthquake monitoring sensor for an existing component set-up changing method according to one embodiment of the present invention;
Fig. 5 is a view of an earthquake monitoring sensor for a vulnerable direction component addition method and an earthquake monitoring sensor for a stable direction component addition method according to one embodiment of the present invention; and
Fig. 6 is a view of a display unit according to one embodiment of the present invention, showing a screen display state of the display unit.

### DETAILED DESCRIPTION

Hereinafter, embodiments of the present invention will be described in more detail with reference to the accompanying drawings.

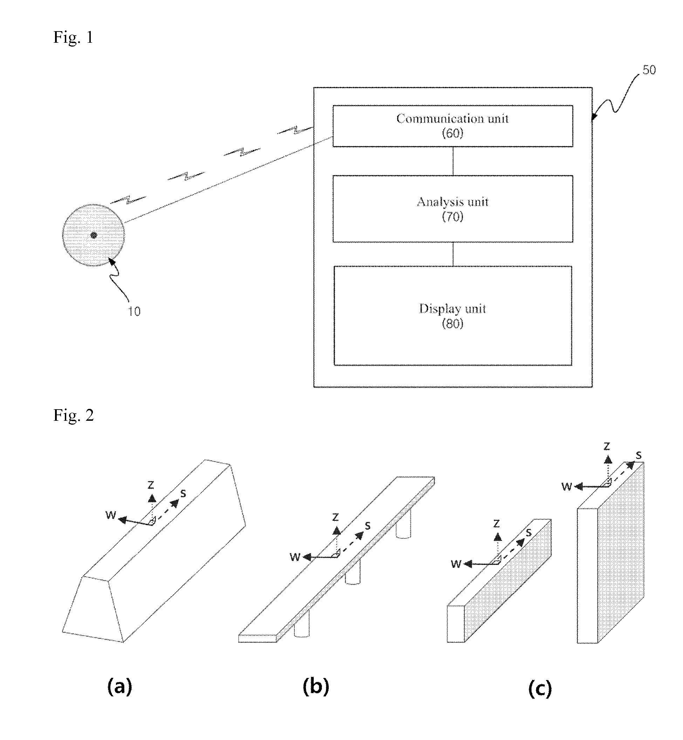

Fig. 1 is a view of an earthquake monitoring system according to one embodiment of the present invention.

Referring to Fig. 1, the earthquake monitoring system according to the embodiment generally includes an earthquake monitoring sensor 10 for transmitting vibration monitoring data including vulnerable direction vibration monitoring data of the facilities, and a monitoring device 50 for analyzing the vibration monitoring data from the earthquake monitoring sensor 10 and monitoring the occurrence of an earthquake.

Here, the earthquake monitoring sensor 10 may be provided to target facilities, and the monitoring device 50 may be provided to an interior earthquake monitoring room operated by a facilities manager in the facilities or provided to an outside institution (for example, a united earthquake monitoring center, a local earthquake monitoring center, etc.) to monitor an earthquake in the corresponding facilities.

To this end, each of the earthquake monitoring sensor 10 and the monitoring device 50 may include a recorder or a digitizer for recording and storing vibration signals such as sensed earthquake signals. Further, the earthquake monitoring sensor 10 may be additionally connected to a device for transmitting data, or may have a transmitting function within the recorder or the digitizer in connection with wired and wireless communication techniques.

Further, the monitoring device 50 may include a communication unit 60 for receiving vibration monitoring data from the earthquake monitoring sensor 10, an analysis unit 70 for analyzing the vibration monitoring data received via the communication unit 60, and a display unit 80 for displaying a result of analysis by the analysis unit 70.

Basically, the present invention enables setting up of a fixed direction of one horizontal component of the earthquake monitoring sensor with regard to a dominant short side direction in an asymmetrical shape of main facilities on the ground surface or a most vulnerable direction of the facilities to transverse load such as an earthquake, or addition of a direction variable component in the existing earthquake monitoring sensor.

Fig. 2 shows schematic configurations and representative kinds of facilities to which the earthquake monitoring sensor and the earthquake monitoring system including the same can be applied.

Referring to Fig. 2, facilities, the height of which is relatively greater than a plane area or the plane area of which has an asymmetrical shape, is more vulnerable in a certain direction to an earthquake having dominant transverse vibration load.

For example, a dam or breakwater, a large-scale retaining wall, and the like as shown in (a) of Fig. 2, or roads, railroads, bridges, pipelines, product production facilities, and the like as shown in (b) of Fig. 2 have asymmetrical shapes, i.e., long shapes in one direction on the plane area, and thus have a vulnerable direction W to an earthquake. In addition, apartments, various buildings, and factories as shown in (c) of Fig. 2 also have a plane shape, particularly, a rectangular shape (i.e. long rectangular shape), and are thus more vulnerable in a direction W parallel to a short side of the rectangular shape to traverse external load than other two directions S and Z in three-dimensional space. In practice, almost all facilities generally have an asymmetrical shape.

In a space, it is easy to grasp a vulnerable direction or weak direction W, and a stable direction S orthogonal to a horizontal plane, as well as a vertical direction Z, according to shapes of facilities. Such a concept of the vulnerable direction W and the stable direction S may be applied to any facilities, the vulnerable direction of which can be structurally and certainly estimated according to asymmetrical or irregular shapes even though the plane shape is not rectangular.

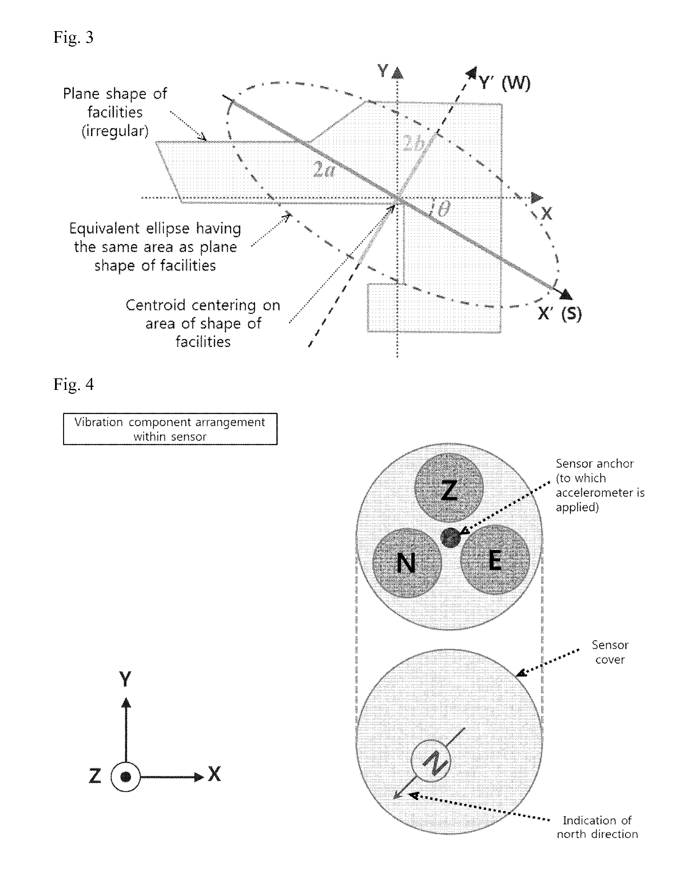

That is, for facilities having an arbitrary irregular plane shape as shown in Fig. 3, a basic Cartesian coordinate system is first set in such a way that one dominant direction X of the facilities and a direction Y orthogonal thereto are set and two axes of the coordinate system are positioned to allow opposite areas with respect to each axis to have the same area while moving the axes. If an intersection point between the two positioned axes becomes a centroid corresponding to a center of a plane shape of the facilities, it is possible to obtain an equivalent ellipse having the same area as the plane shape of the facilities by rotating the Cartesian coordinate system with respect to the centroid. Shape parameters of the equivalent ellipse include a major axis length 2a and a minor axis length 2b, which constitute the ellipse, and an orientation angle θ indicating a degree to which the ellipse is inclined with respect to the Cartesian coordinate axes. These parameters may be used to determine a shape in which the moment of inertia of the ellipse is minimized, and this shape may be provided as an equivalent ellipse. A minor axis direction Y' of the obtained equivalent ellipse becomes the vulnerable direction W of the facilities, and a major axis direction X' of the equivalent ellipse becomes the relatively stable direction S of the facilities.

Such setting-up of the vulnerable direction and the stable direction of the facilities can be easily achieved by previously programmed internal operation when plane shape data of the facilities is input to operation software in the monitoring device 50.

The use of the earthquake monitoring sensor 10 in facilities enables a rapid and efficient facilities earthquake alert and response system to be achieved by directly providing monitoring data of a real sensor as response data with regard to the vulnerable direction of facilities to a facilities manager who must determine the most vulnerable seismic response of the facilities as rapidly as possible, without any additional operation. Moreover, the earthquake monitoring sensor according to the present invention may be used to deduce and verify a structural behavior model of the facilities by continuously accumulating vibration monitoring data with regard to a structural vulnerable direction W and a relatively stable direction S orthogonal thereto.

Current earthquake velocity or acceleration sensors used in the art generally have a cylindrical shape with a relatively low height, or a hexahedral shape with rounded edges. Regardless of the sensor shape such as a cylindrical shape or a hexahedral shape, the sensor basically includes three vibration components therein at intervals of 120° about the center thereof. These three components are one-way components for the vertical direction Z, the north-to-south direction N, and the east-to-west direction E, respectively.

Fig. 4 is a view explaining an earthquake monitoring sensor for an existing component set-up changing method according to one embodiment of the present invention.

When earthquake monitoring data is used only as earthquake alert and response data for target facilities without providing or sharing the data to external institutions, an indicating direction of one directional component (N component in Fig. 4) among horizontal components on a cover of the existing three-component earthquake monitoring sensor expressed in an existing sensor configuration in the X, Y and Z directions of the rectangular coordinate system as shown in Fig. 4 is set parallel to the direction W of the facilities, thereby allowing the most vulnerable behavior of the facilities to be determined without any additional operation or data processing upon occurrence of an earthquake.

Further, when the earthquake monitoring data is provided by the facilities sharing the data with external institutions after a predetermined period of time from a time point of an earthquake, the indicating direction of one directional component (N component in Fig. 4) among the horizontal components of the earthquake monitoring sensor is set to match the direction W of the facilities, and data processing reflecting difference in angle between the direction W and the direction N in the target facilities is performed with regard to the monitored data during a margin period, thereby providing the processed data as data corresponding to absolute azimuth.

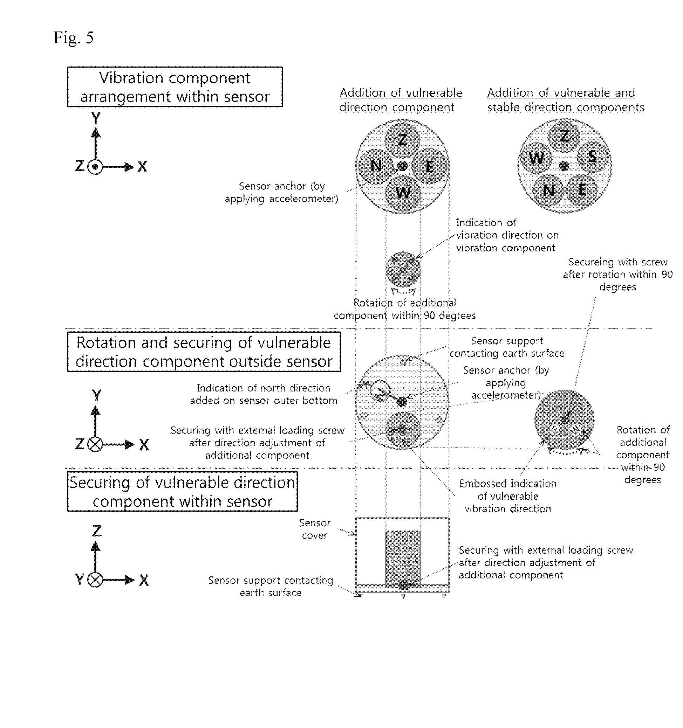

Fig. 5 is a view explaining an earthquake monitoring sensor for a vulnerable direction component addition method and an earthquake monitoring sensor for a stable direction component addition method according to one embodiment of the invention.

The existing sensor may be directly used as shown in Fig. 4, but, in most cases, a facilities manager or an earthquake monitoring data user wants to secure various data in real time for convenience, and to compare and share the data with external data in real time or substantially in real time.

Under such circumstances, since it is desired to secure real time data of the W direction for simultaneously anticipating the most vulnerable earthquake behavior of the target facilities in real time together with the N, E and Z directions as the existing general earthquake monitoring components, a one-way earthquake monitoring component for W direction monitoring is added, as shown in Fig. 5.

Similarly, the earthquake monitoring sensor, to which the vulnerable direction component is added, includes the Z, N and E direction components therein, and thus is required to have a mark of an N component indicating direction on the cover thereof as in the existing sensor.

In addition, like the vulnerable and stable direction components as shown in Fig. 5, a component for monitoring an earthquake in the direction S as well as in the direction W may also be added to the earthquake monitoring sensor to be intuitively and systematically utilized as complex data for evaluation of the structural state of the facilities.

However, the W and S direction components added to the components of the N, E and Z directions in the existing sensor must be precisely adjusted in angle within a maximum range of 90° in the horizontal plane area.

This angle adjustment may be finished in a manufacturing process or a sensor maintenance process by aligning a vibration direction arrow marked on each component with an actual W or S direction of the facilities when the N and W directions of the target facilities are determined before manufacture of the sensor. Further, the vibration direction arrow may be additionally marked on the N and E direction components excluding the Z direction component to be used as an intuitive indicator for determining a relative difference in angle between the respective direction components.

After azimuthal adjustment of the W or S direction component, an additional component must be secured in the sensor. This securing operation can be easily performed by opening the sensor cover in a manufacture or maintenance process. However, an ordering method can be performed under the condition that the N and W directions of the target facilities are not determined, and in the case of a universal earthquake monitoring sensor that can be applied to many possible directional conditions, the N and W directions can be determined within the target facilities or near a monitoring place. Thus, it is necessary to allow angle adjustment in the W or S direction outside the sensor.

In the universal earthquake monitoring sensor for this purpose, a vulnerable direction component extending portion depicted on a sensor outside vulnerable direction component rotary securing portion on a sensor bottom shown in Fig. 5 may be allowed to rotate within a maximum range of 90°. This rotary function configures a vibration direction indication for an additional vulnerable W direction component (or an additional stable S direction component) in the form of an embossed configuration to be used as a rotary knob or an indicator. Further, in an area except for the additional component on the sensor bottom, an N component indicating direction mark is added on the sensor cover such that an angle between the N and W directions can be directly and quantitatively determined. After the W direction component of the sensor is aligned in the W direction of the facilities, the additional component is secured so not to be changed in angle by a loading screw placed on the sensor outside bottom in the sensor outside vulnerable direction component rotary securing portion and the sensor inside vulnerable direction component securing portion of Fig. 5

Earthquake monitoring as earthquake countermeasures for facilities may be achieved by installing the sensor, the recorder and the like on site and through indoor inspection of a manager. When the earthquake monitoring sensor is configured with regard to the structural vulnerable direction of the facilities as described above, it is possible to provide an intuitive and efficient screen instead of a conventional inspection screen which displays a simple list of the sensor monitoring components (causing deterioration in inspection efficiency of a manager).

In a most fundamental and representative method for earthquake countermeasures of facilities, acceleration exceeding a preset level is regarded as an event and emergency inspection of the facilities is performed. Such an event can occur by an earthquake or by a serious external factor affecting the target facilities.

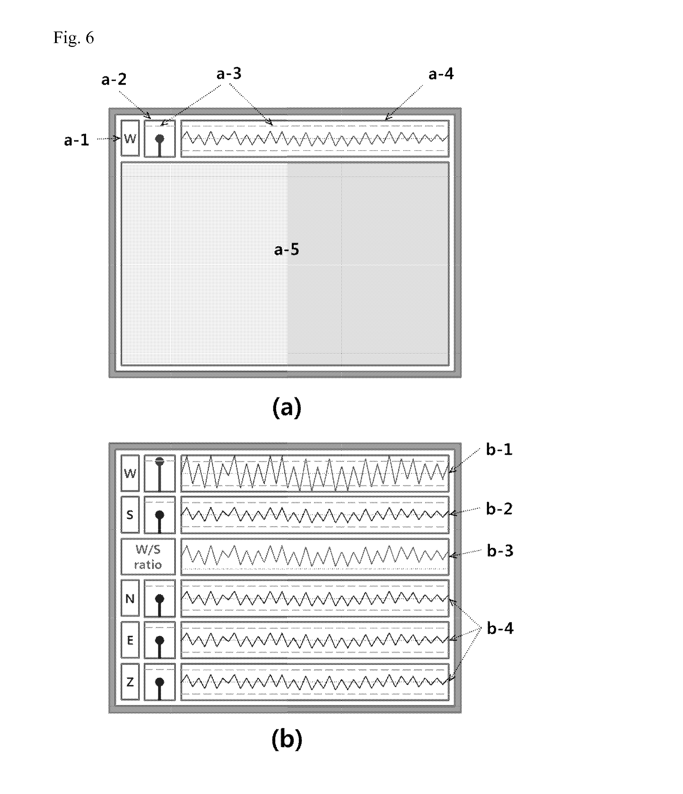

A screen shown in (a) of Fig. 6 is an earthquake inspection screen on ordinary days in which no event occurs. In this case, only inspection of the vulnerable W direction component is expressed externally and expression of the other components is processed internally.

Upon an actual earthquake or application of impact and traverse load by an external attack, a most susceptible response is provided in a structural vulnerable direction of facilities. In one component row on a screen corresponding to one component, a window a-1 displays a first expression component, and another window a-2 displays a vertical bar for representing an absolute value of acceleration (or velocity) in current time. Here, a polygon (e.g., a circle, a rectangle, a pentagon, an explosive type, etc.) is applied to an upper end of the bar to provide heavy impression, thereby maximizing an intuitive effect of a manager. Here, an intention decision event reference acceleration value for inspecting the facilities in practice is provided by an instruction line a-3 to allow the manager to intuitively grasp a situation. In addition, a monitoring acceleration history window a-4 expresses real monitoring data of acceleration over time, and includes lines for positive and negative event reference acceleration values within the expression box to help the manager to intuitively grasp the situation. Except for these information expression sections for earthquake monitoring with regard to the W directional component, the remaining section a-5 under the screen is a surplus area, which allows the manager to perform other work related to the facilities on ordinary days in which no event occurs since monitored acceleration does not reach the reference acceleration value.

The screen shown in Fig. 6 is configured when one earthquake monitoring sensor is used. Therefore, when a plurality of sensors is used, the screen may be reconfigured by division or combination.

If an event such as an earthquake occurs and acceleration greater than a preset acceleration (or velocity) level is monitored, earthquake monitoring information regarding stable S, north-to-south N, east-to-west E and vertical Z direction components, which have been hidden instead of being displayed on the screen, is displayed under the vulnerable W direction component, which is displayed on the screen at normal times, as shown in b of Fig. 6. Two rows relating to the stable S direction component can be displayed in the case that the stable S direction component is added together with the vulnerable W direction component to the existing three-component sensor, in which an S component expression row b-2 has the same configuration as the W component expression row b-1.

However, a W/S ratio expression row b-3 under the S component expression row simply expresses a display window proposing the meaning of this row and expresses a ratio of an S component absolute acceleration value to a W component absolute acceleration value secondly monitored in real time in time series, instead of a component display window or a real-time absolute acceleration value output bar display window, in which the time series for the W/S ratio expression row shows a line having a value of 1 for the purpose of comparison and determination with respect to a W/S ratio of 1, unlike different time series.

The N, E and Z direction components unfolded under event situation are earthquake monitoring component information ascertaining rows commonly expressed by both the sensor having only the vulnerable W direction component added to the existing three components and the sensor having the vulnerable W direction sensor and the stable S direction sensor added thereto. First to third configurations in the row b-4 of the three components (for N, S and Z directions) are the same as those of the W and S direction component information ascertaining rows. Such a monitoring screen may allow a facilities manager to efficiently perform work and monitor an earthquake.

According to the present invention, the earthquake monitoring sensor is provided to facilities having an asymmetrical shape vulnerable to an earthquake and provides a rapid earthquake response with regard to an earthquake-vulnerable direction of the facilities, thereby enabling effective earthquake countermeasures to be taken.

In particular, the use of the earthquake monitoring sensor in the facilities enables a rapid and efficient earthquake alert and response system to be achieved by directly providing monitoring data of a real sensor as response data with regard to the vulnerable direction of facilities to a facilities manager who must determine the most vulnerable seismic response of the facilities as rapidly as possible, without any additional operation.

In addition, the earthquake monitoring sensor according to the present invention may be used to deduce and verify a structural behavior model of facilities by continuously accumulating vibration monitoring data with regard to a structural vulnerable direction W and a relatively stable direction S orthogonal thereto.

Furthermore, the earthquake monitoring sensor according to the present invention may provide intuitive monitoring screens for the vulnerable and stable directions, thereby allowing a facilities manager to efficiently work and monitor an earthquake.

Although some embodiments have been provided to illustrate the present invention, it should be understood that these embodiments are provided by way of illustration only, and that various modifications, variations, and alterations can be made without departing from the spirit and scope of the present invention. The scope of the present invention should be limited only by the accompanying claims and equivalents thereof.

## Claims

1. An earthquake monitoring sensor for facilities, comprising:
a north-to-south component vibration measuring device sensing a north-to-south direction vibration signal; and
an east-to-west component vibration measuring device sensing an east-to-west direction vibration signal,
wherein a vibration signal sensing direction of one of the north-to-south component vibration measuring device and the east-to-west component vibration measuring device is set to match a vulnerable direction of corresponding facilities, and monitoring data output from the vibration measuring device set to match the vulnerable direction is provided as vulnerable direction data of the corresponding facilities.

2. The earthquake monitoring sensor according to claim 1, wherein an indicating direction of the vibration measuring device set up in a vulnerable direction on an outer surface of a cover of the earthquake monitoring sensor is set to match the vulnerable direction of the corresponding facilities.

3. The earthquake monitoring sensor according to claim 1, wherein the vulnerable direction is set to a minor axis direction of an equivalent ellipse, which has the same area as that of a top plane of the facilities and is determined by rotating the Cartesian coordinate system about a centroid corresponding to a center of the top plane of the facilities, when an intersection point between two axes respectively corresponding to a dominant direction of the facilities and a direction orthogonal thereto becomes the centroid.

4. The earthquake monitoring sensor according to any one of claims 1 to 3, further comprising a vertical component vibration measuring device sensing a vertical direction vibration signal.

5. An earthquake monitoring sensor for facilities, comprising:
a north-to-south component vibration measuring device sensing a north-to-south direction vibration signal;
an east-to-west component vibration measuring device sensing an east-to-west direction vibration signal; and
a vulnerable component vibration measuring device sensing a vulnerable direction vibration signal,
wherein monitoring data output from the vulnerable component vibration measuring device is provided as vulnerable direction data of corresponding facilities.

6. The earthquake monitoring sensor according to claim 5, wherein the vulnerable direction vibration measuring device is secured by a screw after direction adjustment.

7. The earthquake monitoring sensor according to claim 5, wherein the vulnerable direction is set to a minor axis direction of an equivalent ellipse, which has the same area as that of a top plane of the facilities and is determined by rotating the Cartesian coordinate system about a centroid corresponding to a center of the top plane of the facilities, when an intersection point between two axes respectively corresponding to a dominant direction of the facilities and a direction orthogonal thereto becomes the centroid.

8. The earthquake monitoring sensor according to claim 5, further comprising a stable component vibration measuring device sensing a stable direction vibration signal.

9. The earthquake monitoring sensor according to claim 8, wherein the vulnerable direction vibration measuring device is secured by a screw after direction adjustment.

10. The earthquake monitoring sensor according to claim 8, wherein the stable direction is set to a major axis direction of an equivalent ellipse, which has the same area as that of a top plane of the facilities and is determined by rotating the Cartesian coordinate system about a centroid corresponding to a center of the top plane of the facilities, when an intersection point between two axes respectively corresponding to a dominant direction of the facilities and a direction orthogonal thereto becomes the centroid.

11. The earthquake monitoring sensor according to any one of claims 5 to 10, further comprising a vertical component vibration measuring device sensing a vertical direction vibration signal.

12. An earthquake monitoring system comprising:
an earthquake monitoring sensor transmitting vibration monitoring data including vulnerable direction vibration monitoring data of facilities; and
a monitoring device analyzing the vibration monitoring data from the earthquake monitoring sensor and monitoring occurrence of an earthquake, the monitoring device comprising:
a communication unit receiving the vibration monitoring data;
an analysis unit analyzing the vibration monitoring data received from the communication unit; and
a display unit displaying results analyzed by the analysis unit, the display unit separately displaying results obtained by analyzing a vulnerable direction.

13. The earthquake monitoring system according to claim 12, wherein the vulnerable direction vibration monitoring data is generated from a vulnerable component vibration measuring device sensing a vulnerable direction vibration signal within the earthquake monitoring sensor.

14. The earthquake monitoring system according to claim 12, wherein the vibration monitoring data transmitted from the earthquake monitoring sensor further comprises stable direction vibration monitoring data of the facilities.

15. The earthquake monitoring system according to claim 12, wherein the stable direction vibration monitoring data is generated from a stable component vibration measuring device sensing a stable direction vibration signal within the earthquake monitoring sensor.

16. The earthquake monitoring system according to claim 14 or 15, wherein the display unit further displays an analysis result in a stable direction and a comparison result from between vulnerable and stable directions.

17. The earthquake monitoring system according to claim 12, wherein the vulnerable direction vibration monitoring data is generated from a vibration measuring device set to match a vulnerable direction of the corresponding facilities between a north-to-south component vibration measuring device and an east-to-west component vibration measuring device.

18. The earthquake monitoring system according to claim 17, wherein the analysis unit reprocesses vulnerable direction vibration measuring data transmitted from the vibration measuring device set to match the vulnerable direction with original absolute azimuthal data.
